# EUROPEAN PATENT APPLICATION

(11) **EP 3 422 159 A1**
(43) Date of publication of application: **02.01.2019**
(21) Application number: 17179128.8
(22) Date of filing: 30.06.2017
(51) Int. Cl.: G06F 3/041, G02F 1/133, G02F 1/1335

(54) **APPARATUS AND METHOD FOR OPERATING AN ELECTRONIC DEVICE**

(71) Applicant: Vestel Elektronik Sanayi ve Ticaret A.S., 45030 Manisa (TR)
(72) Inventor: ÇUBUKÇU, Baran, 45030 Manisa (TR)
(74) Representative: Flint, Adam

(57) **Abstract**

Apparatus for operating an electronic device (1) includes a touch screen (2) having a display (7) and a plurality of light sensors (8). The display (7) has adjustable display settings. The plurality of light sensors (8) obtain a measure intensity of light that is incident on the touch screen (2). A data storage (10) stores information on associations between each of the plurality of light sensors (8) and a particular area of the display (7). A controller (11) obtains a first measure of light intensity from a first of the light sensors (8), obtains a second measure of light intensity from a second of the light sensors (8), compares the first and second measures of light intensity, and provides an adjustment of the display settings of an area of the display (7) associated with the first light sensor if there is a difference between the measured light intensities that is above a predetermined threshold.

## Description

### Technical Field

The present disclosure relates to an apparatus and method for operating an electronic device.

### Background

Electronic devices, such as mobile phones, tablet computers etc., typically include a touch screen having a display. The display operates as an output device and produces an image display to allow the touch screen to show information and graphics etc. to a user. The brightness of a display can be adjusted by a user to suit their requirements.

### Summary

According to a first aspect disclosed herein, there is provided apparatus for operating an electronic device, the apparatus comprising: a touch screen comprising: a display for producing an image display; and a plurality of light sensors, the display having adjustable display settings and the plurality of light sensors being constructed and arranged to obtain a measure intensity of light that is incident on the touch screen; a data storage storing information on associations between each of the plurality of light sensors and a particular area of the display; and a controller configured to: obtain a first measure of light intensity from a first light sensor of the plurality of light sensors; obtain a second measure of light intensity from a second light sensor of the plurality of light sensors; compare the first measure of light intensity and the second measure of light intensity; and provide an adjustment of the display settings of an area of the display associated with the first light sensor or the second light sensor if there is a difference between the measured light intensity of the first light sensor and the measured light intensity of the second light sensor that is above a predetermined threshold.

This allows the controller to determine when there has been a change in the light intensity that is incident on the touch screen and then adjust the display settings of the display accordingly to compensate for the change in light intensity. This improves the readability of the display in the new lighting conditions. Importantly, the controller is also able to identify the particular areas of the touch screen where the light intensity incident thereon has changed. This allows for the controller to adjust the display settings only of particular areas of the display in response to a change in light intensity, rather than for the whole display. This improves the readability of the display when the touch screen is under two distinct lighting conditions.

In an example, the display settings comprise one or more of brightness, contrast and colour intensity of the display screen.

In an example, the adjustment is an increase of the display setting. In another example, the adjustment is a decrease of the display setting.

In an example, the controller provides an adjustment of the display settings of an area of the display associated with the light sensor that obtains a higher measure of light intensity if there is a difference between the measured light intensity of the first light sensor and the measured light intensity of the second light sensor that is above a predetermined threshold.

In an example, the adjustment is based on the lowest measure of light intensity obtained from the plurality of light sensors within a predetermined time period.

In an example, the plurality of light sensors are provided in a light sensor panel.

In an example, the controller is configured to: provide a reduction of a display setting of the whole of the display if it determines that providing an adjustment of that display setting of a particular area of the display would exceed a maximum level of that display setting.

There may also be provided an electronic device comprising apparatus as described above.

According to a second aspect disclosed herein, there is provided a method of operating an electronic device comprising a touch screen having a display for producing an image display and a plurality of light sensors for obtaining a measure intensity of light that is incident on the touch screen, the method comprising: obtaining a first measure of light intensity from a first light sensor of the plurality of light sensors; obtaining a second measure of light intensity from a second light sensor of the plurality of light sensors; comparing the first measure of light intensity and the second measure of light intensity; providing an adjustment of the display settings of an area of the display associated with the first light sensor or the second light sensor if there is a difference between the measured light intensity of the first light sensor and the measured light intensity of the second light sensor that is above a predetermined threshold.

In an example, the display settings comprise one or more of brightness, contrast and colour intensity of the display screen.

In an example, the adjustment is an increase of the display setting.

In an example, the method comprises providing an adjustment of the display settings of an area of the display associated with the light sensor that obtains a higher measure of light intensity if there is a difference between the measured light intensity of the first light sensor and the measured light intensity of the second light sensor that is above a predetermined threshold.

In an example, the adjustment is based on the lowest measure of light intensity obtained from the plurality of light sensors within a predetermined time period.

In an example, the plurality of light sensors are provided in a light sensor panel.

In an example, the method comprises providing a reduction of a display setting of the whole of the display if it is determined that providing an adjustment of that display setting of a particular area of the display would exceed a maximum level of that display setting.

### Brief Description of the Drawings

To assist understanding of the present disclosure and to show how embodiments may be put into effect, reference is made by way of example to the accompanying drawings in which:
Figure 1 shows schematically a front face of an example of an electronic device including a touch screen;
Figure 2 shows schematically a cross section of the electronic device shown in Figure 1, the cross-section taken across line "A-A" of Figure 1;
Figure 3 shows schematically a front face of the electronic device shown in Figure 1;
Figure 4 shows schematically a front face of the electronic device shown in Figure 1; and
Figure 5 shows a flow diagram illustrating an example of a method of operating the touch screen of the electronic device shown in Figures 1-4.

### Detailed Description

Electronic devices, such as mobile phones, tablet computers etc., typically include a touch screen having a display. The display operates as an output device and produces an image display to allow the touch screen to show information and graphics etc. to a user.

The brightness of the whole of a display can be adjusted by a user to suit their requirements. For example, if user is using an electronic device outdoors in bright sunlight, the user may decide to increase the overall brightness of the display in order to increase its readability due to bright sunlight incident on the touch screen. Similarly, if a user is using an electronic device at night or in dark conditions, the user may decide to decrease the overall brightness of the display in order to avoid eye strain. If a user is using an electronic device in normal lighting conditions, they may decide to maintain a medium level of overall brightness for optimum readability.

If a user is using an electronic device and part of its touch screen is in bright sunlight and part of its touch screen is not in bright sunlight (e.g. the bright sunlight is blocked from falling on part of the touch screen by the user's body), the readability of the touch screen's display is affected due to a real or perceived shadow effect from the variation in lighting conditions over the display. The user is then faced with a decision on whether to increase or maintain the brightness of the whole of the display to improve its readability. If the user increases the brightness of the display to improve the readability of the part of the display that is in bright sunlight, then the readability of the part of the display that is not in the bright sunlight is affected. Similarly, if the user does not increase the brightness of the display so as to maintain the readability of the part of the display that is not in the bright sunlight, then the readability of the part of the display that is in bright sunlight is affected. In short, the readability of a typical display of a touch screen is reduced when different parts of the display are subject to different lighting conditions.

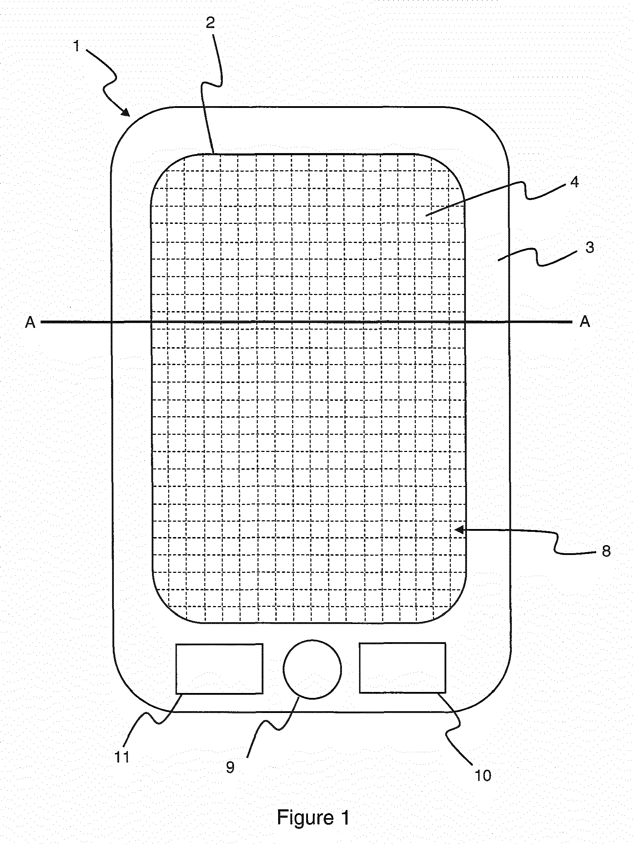

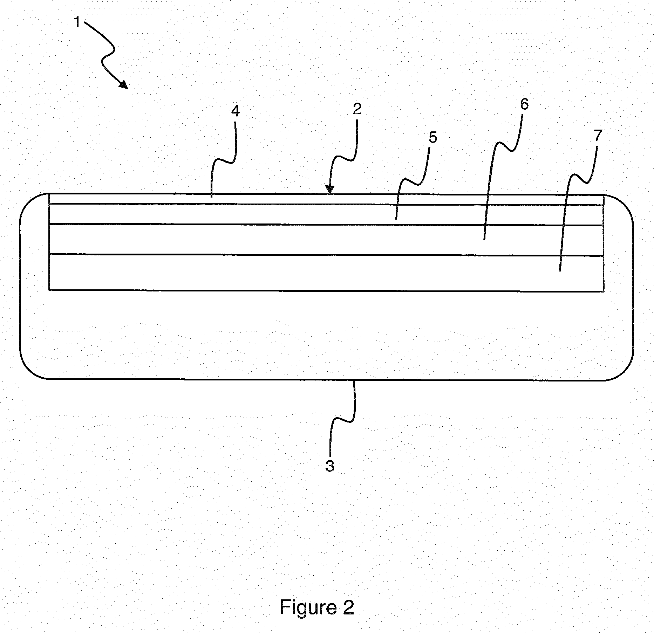

Referring now to Figures 1 and 2, there is shown schematically an example of an electronic device 1 including a touch screen 2 and a housing 3.

The touch screen 2 has a number of layers. In this example, referring particularly to Figure 2, the touch screen 2 includes a cover 4, a light sensor panel 5, an input surface 6, and a display 7. The layers of the touch screen 2 are arranged so that the touch screen 2 can operate as an input device and an output device at the same time. Specifically, the layers are arranged so that the input surface 6 can receive inputs from a user in the form of touch/contact, and so that the display 7 can produce an image display visible to a user. This allows a user to use the input surface 6 to interact directly with what is shown on the display 7. The layers of the touch screen 2 are also arranged so that the light sensor panel 5 can obtain a measure of the intensity of light incident on the touch screen 2/display 7. In this example, the cover 4 overlies the light sensor panel 5, the light sensor panel 5 overlies the input surface 6, and the input surface 6 overlies the display 7. Other layer configurations are possible. Indeed, in other examples, the touch screen 2 may include additional or fewer layers.

The cover 4 is constructed and arranged to protect the more delicate internal components (e.g. the light sensor panel 5, the input surface 6 and the display 7). The cover 4 is therefore formed from a strong, resistant material, such as toughened glass.

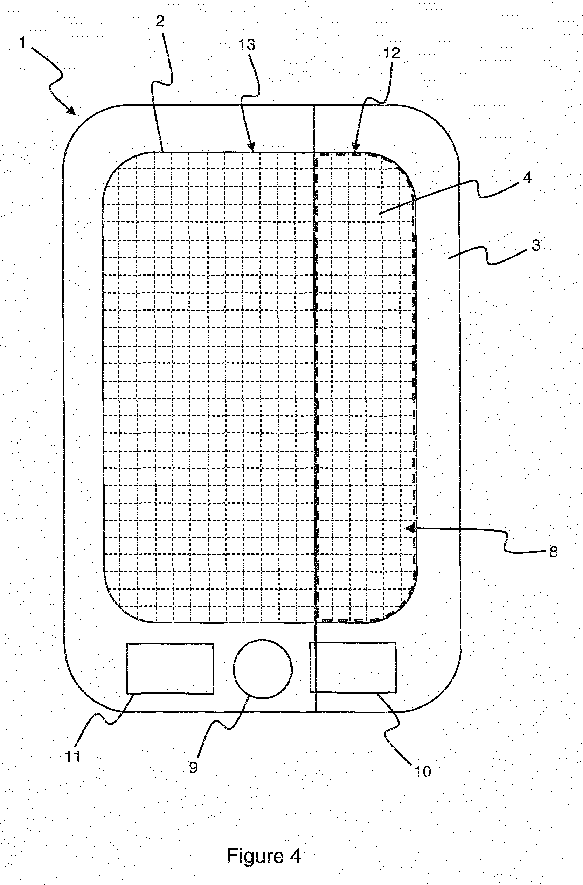

The light sensor panel 5 comprises a plurality of light sensors 8. The plurality of light sensors 8 is constructed and arranged to obtain a measurement of the intensity of light incident on the front face of the touch screen 2. To assist in the understanding of the operation of this example, the plurality of light sensors 8 is visible in Figures 1, 3 and 4. However, it will be understood that in other examples the plurality of light sensors 8 is invisible. The light sensors 8 are arranged over a front face of the touch screen 2 so that they are provided at different locations across the touch screen 2. Each light sensor 8 obtains a measurement of the intensity/strength of light incident on its particular location on the touch screen 2 and therefore the intensity/strength of light incident on different locations of the touch screen 2 can be sensed. In this example, the light sensors 8 are arranged in a regular array. Other configurations are possible. Each of the plurality of light sensors 8 may be any suitable sensor that is capable of obtaining a measure of the intensity of light, such as a photo sensor or a photodetector etc.

The input surface 6 is an input device. The whole of a front face of the input surface 6 is (at least notionally) divided into a plurality of regions for allowing identification of the particular area of the input surface 6 that it is touched by a user.

The display 7 is an output device. In normal use, the display 7 produces an image display on its front face, which is visible to a user. In this example, the display 7 is an organic light-emitting diode (OLED) display screen. In other examples, the display 7 may be a liquid-crystal display (LCD) screen or a plasma display screen or some other type of display screen which has ability to change different parts' display settings according to measured values by each of the light sensors 8. The display 7 has a plurality of reconfigurable display settings (or graphics settings) which can be adjusted to affect the appearance of an image displayed on the display 7. Importantly, the display settings are adjustable for particular individual areas of the display 7, in addition to being adjustable for the whole of the display 7. Display settings may include brightness, contrast and colour intensity. Accordingly, for example, the brightness of a particular area of the display 7 may be increased, which results in a brighter image being displayed in that particular area of the display 7 relative to the other areas of the display 7.

In this example, the housing 3 partially surrounds the touch screen 2. The housing 3 also includes a push-button 9.

A data storage 10 is provided. The data storage 10 stores information on associations between each of the plurality of light sensors 8 of the light sensor panel 5 and a particular corresponding area of the display 7. In this example, each of the plurality of light sensors 8 of the light sensor panel 5 is associated with an immediately adjacent area of the display 7. In a specific example, each of the plurality of light sensors 8 of the light sensor panel 5 is associated with an area of the display 7 that is immediately under the light sensor 8. To this end, as is shown in Figure 2, in this example, the cover 4, light sensor panel 5, input surface 6 and display 7 are each approximately the same size. In addition, the cover 4 almost exactly overlies the light sensor panel 5, the light sensor panel 5 almost exactly overlies the input surface 6, and the input surface 6 almost exactly overlies the display 7. Other layer configurations and associations are possible.

A controller 11, which may be a processor or the like, is provided within the housing 3 for controlling the operation of the electronic device 1. The controller 11 is connected to the light sensor panel 5, the display 7 and the data storage 10. The controller 11 is configured to obtain a measure of light intensity from each of the plurality of light sensors 8. The controller 11 therefore obtains a measure of the intensity of light that is incident on individual regions across the whole of the front face of the touch screen 2. The controller 11 is also configured to compare each of the measurements of light intensity sensed by the plurality of light sensors 8. The controller 11 is also configured to provide an adjustment (e.g. increase) of one or more display settings (e.g. brightness and/or contrast and/or colour intensity) of an area of the display 7 associated with at least one of the plurality of light sensors 8 if the controller 11 senses a difference that is larger than a predetermined threshold between the light intensity measured by that light sensor and the light intensity measured by another light sensor. The predetermined threshold is used to avoid altering any display settings for very small changes in light intensity and avoids the display settings being changed rapidly back and forth when there are only small changes in light intensity. If there is no difference larger than a predetermined threshold in the light intensity between the measurement by one light sensor and another light sensor, the controller 11 takes no further action with regard to the current measurements of the light sensors 8. The controller 11 then continues to check the light intensity readings of the light sensors 8 until a light intensity difference large enough to overcome the predetermined threshold is detected. In this way, the controller 11 is configured to adjust the display settings of one or more individual areas of the display 7 based on the light intensity that is incident on the touch screen 2 in order to make the display 7 more readable for a user.

In an example, the controller 11 is configured to provide an adjustment of the brightness of an area of the display 7 associated with a light sensor if the controller 11 senses a difference between the light intensity measured by that light sensor and the light intensity measured by another light sensor above a predetermined threshold. The adjustment in this example may in general be an increase in brightness or a decrease in brightness, depending on the circumstances and the set-up of the controller 11.

In an example, the controller 11 is also configured to consider and take into account the maximum extent of the display settings of the display 7 when providing an adjustment of the display settings for an area of the display 7. In particular, the controller 11 is configured to provide a reduction of a display setting of the whole of the display 7 (i.e. every area of the display 7) if it determines that providing an adjustment of that display setting of a particular area of the display 7 because of the sensed differences in light intensity would exceed the maximum level of that display setting. This allows for the display setting for the particular area of the display 7 to then be increased relative to the remainder of the display 7. In an example, the controller 11 alerts and informs the user when adjusting an overall display setting.

In an example, when obtaining a measure of light intensity from one of the light sensors 8, the controller 11 is also configured to consider and take into account the light emitted by the display 7. For example, the controller 11 may subtract a known intensity of the light emitted by a particular area of the display 7 from the measure of light intensity obtained by the corresponding light sensor 8.

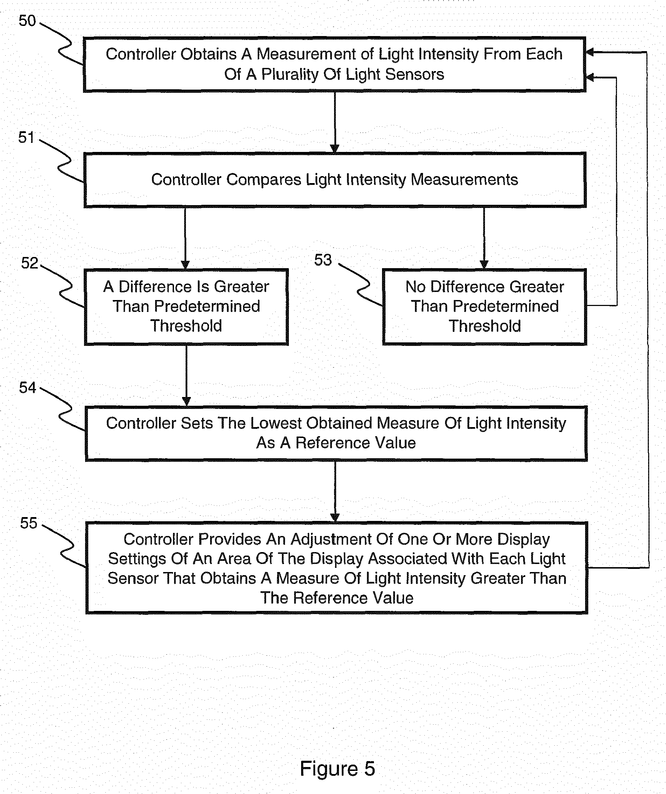

An example of a method of the controller 11 adjusting one or more display settings of an area of the display 7 is shown in Figures 1, 3 and 4, and will now be described with reference to Figure 5.

Initially, referring particularly to Figure 1, a user, who is holding the electronic device 1, is in a location with mild sunlight. The brightness of the display 7 is thus initially set at a medium brightness, for example 50% brightness.

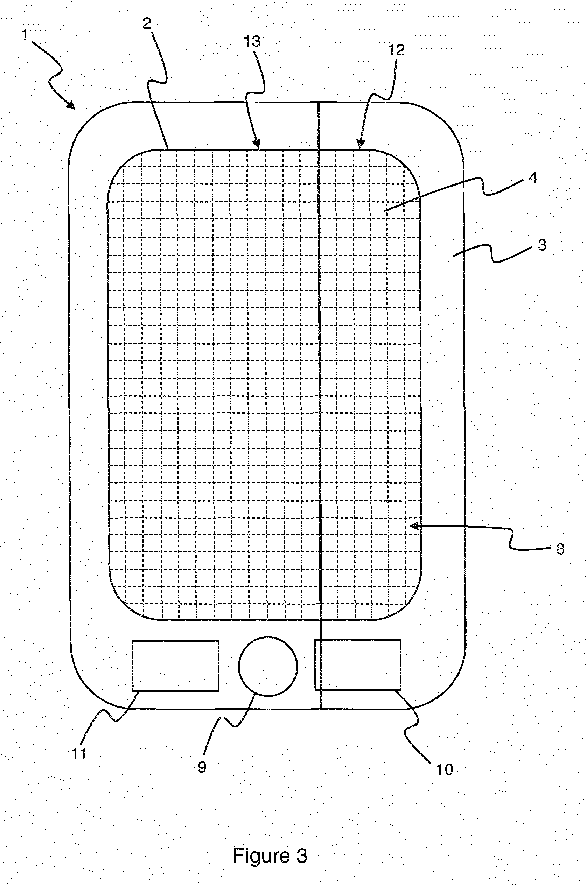

Referring particularly to Figure 3, in an example, the user then moves to a location where bright sunlight is cast over a first region 12 of the electronic device 1, whilst a second region 13 of the electronic device 1 remains in mild sunlight.

At 50, the controller 11 obtains a measurement of the intensity of light that is incident on the touch screen 2 of the electronic device 1 from each of the plurality of light sensors 8. In this example, each of the plurality of the light sensors 8 located in the first region 12 of the touch screen 2 senses that the intensity of light that is incident on the first region 12 is 300 lux. Also, in this example, each of the plurality of the light sensors 8 located in the second region 13 of the touch screen 2 senses that the intensity of light that is incident on the second region 13 of the touch screen 2 is 200 lux.

At 51, the controller 11 compares each of the measurements of light intensity to determine the lowest measure of light intensity sensed by the plurality of light sensors 8. In this example, the lowest measurement of light intensity is 200 lux, which has been measured by the plurality of light sensors 8 located in the second region 13 of the touch screen 2, which is not in bright sunlight.

At 52, if the controller 11 determines that there is a difference between the measurements of light intensity of any two of the plurality of lights sensors 8 that is larger than a predetermined threshold, the method continues on to 54, where the controller 11 sets the lowest measurement of light intensity as a reference value. In this example, the predetermined threshold is 50 lux. The predetermined threshold is factory set and may subsequently be adjusted by the user. The difference between the measured light intensity incident on the first region 12 and the second region 13 is 100 lux, which is greater than the predetermined threshold. Accordingly, the lower measurement of 200 lux, which is from the plurality of light sensors 8 located in the second region 13, is set as the reference value.

At 53, if the controller 11 determines that there is not a difference between the measurements of light intensity of any two of the plurality of lights sensors 8 that is larger than a predetermined threshold, the method reverts back to 50, where the controller 11 continues to check the readings of the light sensors 8 until a difference large enough to overcome the predetermined threshold is detected. The controller 11 is configurable to re-check the readings of the light sensors 8 after a predetermined time interval, such as every five seconds. The predetermined time interval is factory set and may be adjusted by a user.

At 55, the controller 11 provides an adjustment of the display settings (e.g. brightness, contrast, colour intensity etc.) of an area of the display 7 associated with (i.e. beneath) each of the plurality of light sensors 8 that obtains a measure of light intensity larger than the reference value. This adjustment of the image, etc. may be such that the image, etc. displayed by the display 7 appears to a user to be homogeneous, or at least more homogeneous than without the adjustment, regardless of the intensity of light that is incident on different regions of the touch screen 2. The extent of this adjustment may be based on the difference between a light sensor's measured light intensity and the reference value. For example, if there is a large difference between the light intensity sensed by a particular light sensor 8 and the reference value light intensity, the controller 11 makes a corresponding large adjustment to the display settings of the area of the display 7 associated with that particular light sensor 8. Similarly, if there is a small difference between the light intensity sensed by a particular light sensor 8 and the reference value light intensity, the controller 11 makes a corresponding small adjustment to the display settings of the area of the display 7 associated with that particular light sensor 8.

In this example, the difference between the light intensity sensed by the light sensors 8 of the first region 12 of the touch screen 2 and the reference value is 100 lux. In response, the controller 11, which is configured to provide an adjustment of the brightness display setting, increases the brightness of the areas of the display 7 associated with the light sensors 8 of the first region 12 of the touch screen 2 by say 40 percentage points, that is from 50%, to 90% brightness. The difference between the light intensity sensed by the light sensors 8 of the second region 13 of the touch screen 2 and the reference value is 0 and therefore the controller 11 makes no change to the brightness of the areas of the display 7 associated with the light sensors 8 of the second region 13 of the touch screen 2.

If, for example, the difference between the light intensity sensed by a particular light sensor 8 and the reference value is small (e.g. 25 lux), the controller 11 may compensate by increasing the brightness of the area of the display 7 associated with the particular light sensor 8 by say 10 percentage points, that is from 50% to 60% brightness. In another example, the difference between the light intensity sensed by a particular light sensor 8 and the reference value is very large (e.g. 150 lux). The controller 11 may consequently seek to compensate by increasing the brightness of the area of the display 7 associated with the particular light sensor 8 by say 60 percentage points, that is from 50% to 110% brightness. This is however 10 percentage points over the maximum brightness of the display 7. Therefore, in an example, the controller 11 instead first reduces the overall brightness of the display 7 by say 10 percentage points, that is from 50% to 40%, and then secondly increases the brightness of the area of the display 7 associated with the particular light sensor 8 by say 60 percentage points, that is from 40% to 100%. Thus, the controller 7 increases the brightness of the area of the display 7 associated with the particular light sensor 8 relative to the remainder of the display 7 by the correct amount whilst staying within the maximum permissible brightness of the display 7. The controller 11 then informs the user that it has decreased the overall brightness of the display 7. In an alternative and equivalent example, the controller 11 instead first reduces the brightness of areas of the display 7 that are not associated with the particular light sensor 8 by say 10 percentage points, that is from 50% to 40%, and then secondly increases the brightness of the area of the display 7 associated with the particular light sensor 8 by say 50 percentage points, that is from 50% to 100%.

The controller 11 then obtains new light intensity readings of the light sensors 8 after a predetermined time interval and again carries out the above method.

An advantage of this arrangement is that the controller 11 can use the plurality of light sensors 8 to determine exactly where light is incident on a touch screen 2/display 7, and thus can adjust the display settings of the corresponding area(s) of the display to compensate rather than adjust the display settings of the whole of the display 7. Consequently, an image (e.g. graphics and/or text, etc.) displayed on the display 7 is more readable for a user because the user perceives the display settings of the display 7 to be (more) homogenous.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate panel (FPGA), digital signal processor (DSP), graphics processing units (GPUs), etc. The chip or chips may comprise circuitry (as well as possibly firmware) for embodying at least one or more of a data processor or processors and a digital signal processor or processors, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. Apparatus for operating an electronic device, the apparatus comprising:
a touch screen comprising: a display for producing an image display; and a plurality of light sensors, the display having adjustable display settings and the plurality of light sensors being constructed and arranged to obtain a measure intensity of light that is incident on the touch screen;
a data storage storing information on associations between each of the plurality of light sensors and a particular area of the display; and
a controller configured to: obtain a first measure of light intensity from a first light sensor of the plurality of light sensors; obtain a second measure of light intensity from a second light sensor of the plurality of light sensors; compare the first measure of light intensity and the second measure of light intensity; and provide an adjustment of the display settings of an area of the display associated with the first light sensor or the second light sensor if there is a difference between the measured light intensity of the first light sensor and the measured light intensity of the second light sensor that is above a predetermined threshold.

2. Apparatus according to claim 1, wherein the display settings comprise one or more of brightness, contrast and colour intensity of the display screen.

3. Apparatus according to claim 2, wherein the adjustment is an increase of the display setting.

4. Apparatus according to any preceding claim, wherein the controller provides an adjustment of the display settings of an area of the display associated with the light sensor that obtains a higher measure of light intensity if there is a difference between the measured light intensity of the first light sensor and the measured light intensity of the second light sensor that is above a predetermined threshold.

5. Apparatus according to any preceding claim, wherein the adjustment is based on the lowest measure of light intensity obtained from the plurality of light sensors within a predetermined time period.

6. Apparatus according to any preceding claim, wherein the plurality of light sensors are provided in a light sensor panel.

7. Apparatus according to any preceding claim, wherein the controller is configured to: provide a reduction of a display setting of the whole of the display if it determines that providing an adjustment of that display setting of a particular area of the display would exceed a maximum level of that display setting.

8. An electronic device comprising apparatus according to any preceding claim.

9. A method of operating an electronic device comprising a touch screen having a display for producing an image display and a plurality of light sensors for obtaining a measure intensity of light that is incident on the touch screen, the method comprising:
obtaining a first measure of light intensity from a first light sensor of the plurality of light sensors;
obtaining a second measure of light intensity from a second light sensor of the plurality of light sensors;
comparing the first measure of light intensity and the second measure of light intensity;
providing an adjustment of the display settings of an area of the display associated with the first light sensor or the second light sensor if there is a difference between the measured light intensity of the first light sensor and the measured light intensity of the second light sensor that is above a predetermined threshold.

10. A method according to claim 9, wherein the display settings comprise one or more of brightness, contrast and colour intensity of the display screen.

11. A method according to claim 9 or claim 10, wherein the adjustment is an increase of the display setting.

12. A method according to any one of claims 9 to 11, comprising providing an adjustment of the display settings of an area of the display associated with the light sensor that obtains a higher measure of light intensity if there is a difference between the measured light intensity of the first light sensor and the measured light intensity of the second light sensor that is above a predetermined threshold.

13. A method according to any one of claims 9 to 12, wherein the adjustment is based on the lowest measure of light intensity obtained from the plurality of light sensors within a predetermined time period.

14. A method according to any one of claims 9 to 13, wherein the plurality of light sensors are provided in a light sensor panel.

15. A method according to any one of claims 9 to 14, comprising providing a reduction of a display setting of the whole of the display if it is determined that providing an adjustment of that display setting of a particular area of the display would exceed a maximum level of that display setting.
